# EUROPEAN PATENT SPECIFICATION

(11) **EP 2 368 389 B1**
(45) Date of publication and mention of the grant of the patent: **12.12.2012**
(21) Application number: 08875124.3
(22) Date of filing: 23.12.2008
(51) Int. Cl.: H04W 48/16

(54) **TECHNIQUE FOR CONTROLLING BEARER SELECTION**
TECHNIK ZUM STEUERN DER TRÄGERAUSWAHL
TECHNIQUE DE CONTRÔLE DE LA SÉLECTION DU PORTEUR

(43) Date of publication of application: 28.09.2011
(73) Proprietor: Telefonaktiebolaget L M Ericsson (publ), 164 83 Stockholm (SE)
(72) Inventor: LOHMAR, Thorsten, 52074 Aachen (DE); WILLIG, Johannes, 52134 Herzogenrath (DE)
(74) Representative: von Zmuda-Trzebiatowski, Margarethe
(86) International application number: PCT/EP2008/011066
(87) International publication number: WO 2010/072239

(56) References cited:
- EP-A- 1 521 492
- WO-A-2004/052040
- WO-A-2008/046643
- US-A1- 2005 118 992

## Description

### Technical Field

The present disclosure generally relates to a technique for transporting content data such as video data, audio data, multimedia data or text data to a plurality of mobile clients in a network. In particular, the disclosure is directed to an efficient usage of different transport mechanisms in a hybrid network.

### Background

Content services such as mobile TV, multimedia channels, audio programs and newsticker services can be provided by mobile broadcast technologies. Existing broadcast technologies include the so-called Multimedia Broadcast/Multicast Service (MBMS) standard. The MBMS standard enhances cellular networks that are based on the Global System for Mobile communications (GSM), the Universal Mobile Telecommunication System (UMTS), or a combined GSM-UMTS-network architecture. Other broadcast technologies include Digital Video Broadcasting to Handheld receivers (DVB-H) and Digital Multimedia Broadcasting (DMB), which provide a digital data stream over individual frequency bands for each broadcasting program.

Broadcasting refers to transmitting content data to all terminals or user equipments in a network, collectively referred to as clients, or to a specified group of clients. The latter is also referred to as multicasting. Throughout this document, a broadcast transmission is to be understood as a generic term for a one-to-many (or point-to-multipoint, PTM) transmission, encompassing also a multicast transmission. A geographical area covered by the broadcast transmission of a certain content service is referred to as a broadcast area or PTM area.

While broadcasting distributes content data from a sender to a plurality of clients, the counterpart is a point-to-point (PTP) transmission, which is also referred to as uni-casting. With unicast transmission, content data is transferred from a sender to a single destination. By example, unicast transmissions are realizable by the HighSpeed Downlink Packet Access (HSDPA) standard defined for UMTS-based networks. Independent of the underlying transmission technology, the provision of certain content data is collectively referred to as a content service herein.

The simultaneous distribution of identical content to a plurality of clients using a broadcast transmission is significantly more resource-efficient than individual unicast transmissions. The general idea of a broadcast transport mechanism is to propagate the content in a network only once, creating copies only when links to the multiple destinations split. The broadcast transmission saves considerable resources in both a Core Network (CN) and a Radio Access Network (RAN), the latter connecting the clients with the CN. Standardized implementations of RANs include GSM EDGE RAN (GERAN) and UMTS Terrestrial RAN (UTRAN).

The unicast transmission of content requires resources depending on the number of clients. In broadcast transmissions, on the other hand, it is not the number of clients but the number of content services that determines the required resources. Consequently, for mass content services, particularly content services with high bandwidth demands such as mobile TV, broadcast transmission is generally preferred over unicast transmission.

While mobile users expect the content service to be comprehensive in spatial coverage, it is not reasonable to provide comprehensive service coverage based entirely on mobile broadcast technologies. In sparely populated areas, such as rural areas with infrequent service requests, unicast transmission is more efficient because of its flexible resource allocation. Allocating a unicast transmission requires a registration of the client at the sender or at a service center node of the hybrid network, such as the Broadcast-Multicast Service Centre '(BM-SC) of the MBMS technology.

Broadcast content reception, on the other hand, in many cases does not require a registration of the client, which may result in limitations of conventional techniques. By example, file delivery by Push-Broadcast Services (PBS) subdivides the transmission into separate transmission sessions. A broadcast bearer of the PBS is therefore idle between the transmission sessions. A non-registered client leaving the broadcast area of the PBS cannot be alerted by the hybrid network, because the hybrid network is unaware of the broadcast content reception of the client in the absence of a registration. Conversely, the client is also not able to detect the leaving of the broadcast area, because the client cannot differentiate from pure listening whether it is inside the broadcast area and the broadcast bearer is idle or if it is outside of the broadcast area. This causes a client having left the broadcast area to miss all following transmission sessions of the PBS, even though the client outside the broadcast area might still have the possibility of switching to the unicast bearer. Thus, the conventional technique suffers, especially for mobile clients and small broadcast areas, from a high risk of missing transmission sessions.

A possible solution to control a safe broadcast content reception of all transmission sessions would be to enforce a registration of all clients receiving the PBS at the beginning of the PBS and to require for each transmission session a report to follow in case of successful reception. However, the broadcast transmission regularly addresses a large number of clients. Checking all reception reports for each transmission session would cause a long delay and a large amount of signaling data.

Document US 2005/0118992 A1 discloses a method of transmitting and receiving MBMS service availability information. The MBMS service availability information is transmitted from a Radio Network Controller to each of a plurality of cells under its control. An MBMS service availability message includes service availability information and resource availability information regarding at least one MBMS service available in the cell. A user equipment (UE) determines if a desired MBMS service can be received in a current cell, currently or in the future.

Document EP 1 521 492 A2 also discloses a method for transmitting service availability information in a mobile communication system. Cells for serving MBMS are determined and a paging message is transmitted to the UEs in the cells for serving an MBMS. A service availability message regarding at least one MBMS, which is available in at least one of the plurality of cells, is transmitted to the UEs in the cells for serving the MBMS.

Document WO 2008/046648 A1 discloses a device for selecting the type of a bearer channel for broadcasting contents, including a PTP and PTM type bearer channel. The device comprises control means, by which a user of a communication terminal (UE) selects content. In the presence of data associated with the selected content, the device further comprises selection means designating an accessible PTM bearer channel. In case there is no accessible PTM bearer channel, the device requests a creation of the PTP type bearer channel by the service platform for receiving the selected content.

### Summary

Accordingly, a technique is needed which allows for an optimized usage of transport mechanisms for content services provided by a hybrid network.

This need is satisfied according to a first aspect by a method of controlling bearer selection by a mobile client in a network having a plurality of access areas, each access area providing for a transmission of content data at least one of a point-to-multipoint-type bearer (PTM-type bearer) and a point-to-point-type bearer (PTP-type bearer) according to claim 1. The method comprises the step of receiving information regarding a local bearer topology (LBT) comprising at least two neighboring access areas including an access area of the mobile client, wherein the information regarding the LBT (LBT information) indicates for each access area of the LBT an availability or unavailability of at least one bearer of at least one bearer type. The method further comprises the step of performing bearer selection based on the LBT information.

The LBT information can comprise an availability list indicating one or more access areas (for example by access area identifiers) and for each listed access area at least one available bearer or bearer type. The LBT information can also provide information regarding "blank spots" in a coverage area of the network or in a coverage area of a specific bearer type. Additionally, or as an alternative, the LBT information can thus comprise an unavailability list indicating one or more access areas (for example by access area identifiers) and for each listed access area at least one unavailable bearer or bearer type. The indicated unavailability of a bearer type can prevent the mobile client from repeatedly trying to access the unavailable bearer or bearer type, which reduces power consumption of the mobile client.

The indication of at least one bearer of at least one bearer type can furthermore encompass the indication of at least two different PTM-type bearers or at least two different PTP-type bearers. For example, the LPT information can indicate for some or all access areas of the LBT the availability or unavailability of two PTM-type bearers, such as DVB-H and MBMS bearers. This LBT information can induce a mobile client within a specific access area to perform PTM-to-PTM switching.

The method may be performed for content services (such as PBS) subdividing a content transmission into separate transmission sessions. For example, when a mobile client is switched on during an idle period of the content transmission, the mobile client can select, based on the received LBT information, a bearer indicated as available in the (current) access area of the mobile client and safely receive the following transmission sessions on the selected bearer.

Based on the LBT information, the mobile client can move within a geographic region covered by the LBT and select a preferred bearer without further need of additional signaling, thereby saving network resources. Moreover, with the received LBT information, the mobile client can autonomously select the bearer available in the (current) access area of the mobile client even during idle periods of the transmission.

The reception of the LBT information and the bearer selection can depend on a change of the access area of the mobile client. At least one of the method steps can be repeated after or triggered by the change of the access area by the mobile client. In case the mobile client receives content data in a first access area of the mobile client while moving to a second access area, the mobile client can thus repeat the step of performing bearer selection. As an advantage, this allows the mobile client to seamlessly switch to another bearer type. For example, if the first access area provides a PTM-type bearer and the second access area only provides a PTP-type bearer, the mobile client can switch, based on the LBT information, from the PTM-type bearer to the PTP-type bearer as a result of the repeated bearer selection, and vice versa.

As another example, the first access area of the mobile client may only provide a PTP-type bearer, while the second access area of the mobile client provides a PTM-type bearer and a PTP-type bearer. In this case, the mobile client moving from the first to the second access area can select a preferred bearer based on the LBT information. For example, the mobile client can select the PTM-type bearer whenever indicated as available in the LBT information. In such a way, resources of the network are used more efficiently.

The method can furthermore comprise the step of sending an LBT request for the LBT information to a node of the network. For example, when the mobile client does not receive any content data, there is no need for LBT information, and the mobile client may refrain from sending an LBT request. On the other hand, when the mobile client is switched on, it can send an LBT request and receive LBT information for performing bearer selection. Accordingly, network traffic caused by the LBT information can be adapted to an actual need of the mobile client, which further minimizes the network traffic.

The LBT request can furthermore include a service identifier regarding a content service provided by the network, and a bearer indicated as available in the requested LBT information can provide content data of the identified content service. This allows to tailor the LBT information to those content services which are of particular interest to the mobile client. For example, the access area of the mobile client can provide for a PTM-type bearer and a PTP-type bearer in general, while the content service of interest can be provided via PTP transmission. In this case, the LBT information is tailored to the content service by indicating (only) the PTP-type bearer as available.

The LBT information furthermore indicates for at least one access area of the LBT if it is a border access area of the LBT. In other words, the LBT comprises one or more border access areas. The LBT may also comprise one or more access areas that are not border access areas. In one implementation, the LBT is generated such that the current access area of the mobile client is not a border access area.

According to an exemplary first definition, a border access area of the LBT is an access area of the LBT which is not surrounded by one or more other access areas of the LBT. According to a second definition, the border access area of the LBT can be any access area of the LBT which is partially or completely within a redefined border distance to a border line of the LBT. According to a third definition, the border access area can be any access area of the LBT which is partially or completely in a predefined spot area within the LBT. According to a fourth definition, the border access area may have at least one neighboring access area that is not included in the LBT. The mobile client can, for example, compare the (current) access area of the mobile client with those access areas of the LBT indicated as border access area of the LBT. This allows the mobile client to request new LBT information for a newly defined LBT in which the border access area is no longer a border access area (but, e.g., fully surrounded by access areas also included in the new LBT) or switch to any conventional content reception technique sufficiently ahead in time before leaving the LBT.

A border access area of the LBT can be indicated in the LBT information by an access area identifier without position information of the border access area, which reduces the amount of signaling data. Furthermore, the mobile client does not have to perform a topological analysis of the received LBT information to identify border access areas, which reduces required computational power of the mobile client. However, the method may alternatively include the step (performed by the mobile client) of performing such a topological analysis to determine border access areas itself (e.g., in cases in which the border access areas are not expressly indicated in the LBT information).

Sending the LBT request and/or the LBT information can be triggered when the mobile client is located in or enters a border access area. This allows the mobile client to update its LBT information prior to leaving the area covered by the previous LBT. Based on the updated LBT information, the mobile client can seamlessly continue performing bearer selection in spite of a limited size covered by the LBT. Changing the size of the LBT allows adapting a frequency of the LBT updates.

The network can provide a plurality of content services, wherein each content service provides content data. For example, the content service can provide the content data to a plurality of mobile clients. The method can furthermore comprise the step of sending a service request for service information to a node of the network, wherein the service information indicates at least one content service provided at present or in future in the access area of the mobile client. Additionally, the service information can indicate for each indicated content service which bearer or bearer type to select. Still further, the method can comprise the step of receiving from the node of the network the requested service information indicating for each of indicated content service which bearer or bearer type to select. Based on the received service information, the mobile client can display to a user of the mobile client which services are actually available in the access area of the mobile client. The service information can also include starting times of the at least one content service provided.

The method can further comprise the step of sending service subscription information regarding an indicated content service to the node in the network. This allows, also in the case of content reception via the PTM-type bearer, the network to automatically update the LBT information of the subscribed mobile client. Additionally, the LBT information can be tailored to the content service (i.e., generated based on the availability of the content service in the LBT).

The need is satisfied according to a further aspect by a method of controlling bearer selection by a mobile client in a network having a plurality of access areas, each access area providing for a transmission of content data at least one of a point-to-multipoint-type bearer (PTM-type bearer) and a point-to-point-type bearer (PTP-type bearer) according to claim 6. The method comprises the step of determining information regarding a local bearer topology (LBT) comprising at least two neighboring access areas including an access area of the mobile client, wherein the LBT information indicates for each access area of the LBT an availability or unavailability of at least one bearer of at least one bearer type. The method further comprises the step of sending the LBT information to the mobile client.

In case the network cannot provide a certain or any bearer or bearer type within a certain access area, the LBT information covering this access area can indicate the unavailability of this bearer or bearer type. The indication can also encompass the indication of at least two different PTM-type bearers or at least two different PTP-type bearers.

Based on the LBT information provided by the network to the mobile client, the mobile client can autonomously select a preferred bearer or bearer type while moving in the area covered by the LBT without further need of additional signaling. The network can further apply the LBT information as an instrument of balancing a content traffic load over different bearer types.

The method may also comprise the step of receiving an LBT request for the LBT information from the mobile client. Receipt of an LBT request for the LBT information can beneficially reduce the frequency of sending the LBT information to the mobile client. For example, the network can trigger the steps of determining LBT information and sending the LBT information by the reception of an LBT request.

The LBT information, furthermore, indicates for at least one access area of the LBT if it is a border access area of the LBT. This allows the mobile client to detect the border of the area covered by the LBT. The step of sending the LBT information can be triggered when the mobile client is located in or enters a border access area of a current or previous LBT. For example, the network can track the access area of the mobile client and trigger at least one of the steps of determining and sending new LBT information to the mobile client in case the tracked access area of the mobile client is a border access area of the previous LBT. Accordingly, the mobile client can automatically receive updates of the LBT information.

The network can provide a plurality of content services, wherein each content service provides content data. The method can furthermore comprise the steps of receiving a service request for the service information from the mobile client, wherein the service information indicates at least one content service provided at present or in future in the access area of the mobile client on the selected bearer type or bearer out of the plurality of content services provided by the network. Still further, the method can comprise the step of sending to the mobile client the requested service information indicating for each indicated content service which bearer or bearer type to select. The service information can also include starting times of the indicated content service.

The content services indicated in the service information can furthermore depend on the mobile client requesting the service information. For example, the service information can select the at least one content service according to an interest profile assigned to the mobile client or a user of the mobile client.

The method can furthermore comprise the step of receiving service subscription information regarding a content service from the mobile client. The network may automatically provide at least one of LBT information and service information to the subscribed mobile client. Furthermore, the network can analyze subscription information for a plurality of mobile clients regarding the at least one content service in order to select an efficient bearer type for providing the content service.

The network can determine the LBT information by generating the LBT information based on a PTM area definition (which may be retrieved from a first database of the network). Generating the LBT information can furthermore be based on an access area status (which may be retrieved from the first database or from a second database of the network). For example, the network can retrieve a current status regarding the availability or unavailability of a certain bearer or bearer type in a certain access area.

The shape of the LBT can take into account client mobility information. The mobility information may include at least one of the access area of the mobile client, a location of the mobile client, a location history of the mobile client, a movement direction of the mobile client, and a movement speed of the mobile client. For example, the location history or the movement direction can indicate a linear or almost linear motion of the client along a road, in which case the shape of the LBT can be elongated in the direction of motion. Furthermore, the network can match the client mobility information with a road map stored in the network, so that a location of the mobile client matching a road causes the shape of the LBT to be elongated along the road. An adapted shape of the LBT avoids irrelevant signaling information.

Alternatively or in addition, the LBT information can be retrieved from a third database in the network depending on the client mobility information. For example, the network can store specific LBT information for different locations or access areas or groups of access areas. This can speed-up the step of determining LBT information and reduce computational requirements for the node of the network.

The LBT information can comprise at least one of a first list for indicating PTM bearer access areas, a second list for indicating PTP bearer access areas, and a third list for indicating border access areas of the LBT. The first list and the second list for indicating different bearer types can, furthermore, indicate different PTM bearer types or different PTP bearer types. Moreover, the first list and the second list can indicate the availability or the unavailability of the indicated bearer or bearer type in the access area. An access area can be indicated in one of the lists by an access area identifier. Alternatively or in addition, access areas can be indicated by position information. The indication by access area identifiers is beneficial to reduce an amount of signaling data. The indication of position information is beneficial to improve a spatial resolution of the bearer selection.

The need is also satisfied according to a still further aspect by a computer program product. The computer program product comprises program code portions for performing one or more of the steps of one or more of the method aspects described herein when the computer program product is executed on one or more computing devices. The computer program product may be stored on a computer-readable recording medium such as a permanent or re-writeable memory, a CD-ROM, or a DVD. The computer program product may also be provided for download via one or more computer networks, such as the Internet, a cellular telecommunications network or a wireless or wired Local Area Network (LAN).

The need is also satisfied according to another aspect by a bearer selector for a mobile client connected to a network having a plurality of access areas, each access area providing for a transmission of content data at least one of a point-to-multipoint-type bearer (PTM-type bearer) and a point-to-point-type bearer (PTP-type bearer) according to claim 14. The bearer selector comprises a receiver and a processor. The receiver is adapted to receive information regarding a local bearer topology (LBT) comprising at least two neighboring access areas including an access area of the mobile client, wherein the LBT information indicates for each access area of the LBT availability or unavailability of at least one bearer of at least one bearer type. The processor is adapted to perform bearer selection based on the LBT information.

The need is also satisfied according to another aspect by a bearer topology generator for a node of a network having a plurality of access areas, each access area providing for a transmission of content data at least one of a point-to-multipoint-type bearer (PTM-type bearer) and a point-to-point-type bearer (PTP-type bearer) according to claim 15. The bearer topology generator comprises a processor and a sender. The processor is adapted to determine information regarding a local bearer topology (LBT) comprising at least two neighboring access areas including an access area of the mobile client, wherein the LBT information indicates for each access area of the LBT an availability or unavailability of at least one bearer of at least one bearer type. The sender is adapted to send the LBT information to the mobile client.

### Brief Description of the Drawings

In the following, the invention will further be described with reference to exemplary embodiments illustrated in the figures, in which:
- Fig. 1: is a schematic overview of a PTP-enabled network in which the technique presented herein can be practiced;
- Fig. 2: is a schematic overview of a PTM-enabled network in which the technique presented herein can be practiced;
- Fig. 3: illustrates functional components of a system comprising a bearer selector embodiment and a bearer topology generator embodiment;
- Fig. 4: shows an example of a local bearer topology; and
- Fig. 5: is a signaling diagram illustrating a method embodiment.

### Detailed Description

In the following description, for purposes of explanation and not limitation, specific details are set forth, such as specific network systems including particular network nodes, communication standards etc., in order to provide a thorough understanding of the technique presented herein. It will be apparent to one skilled in the art that this technique may be practiced in other embodiments that depart from these specific details. For example, the skilled artisan will appreciate that the technique may be practiced in connection with wireless communication networks different from the UMTS network implementing MBMS services as discussed below. The technique may also be practiced in wireline communication systems, for example, in IP networks. Basically, the disclosure may be practiced within any PTP/PTM-enabled data transmission system in which some kind of data content is provided to one or more mobile clients.

Those skilled in the art will further appreciate that the steps and functions explained herein below may be implemented using individual hardware circuitry, using software functioning in conjunction with a programmed microprocessor or a general purpose computer, using an Application Specific Integrated Circuit (ASIC), or using one or more Digital Signal Processors (DSPs). It will also be appreciated that while the technique is described as a method, it may also be embodied in a computer processor and a memory coupled to the processor, wherein the memory is encoded with one or more programs that perform the method disclosed herein when executed by the processor.

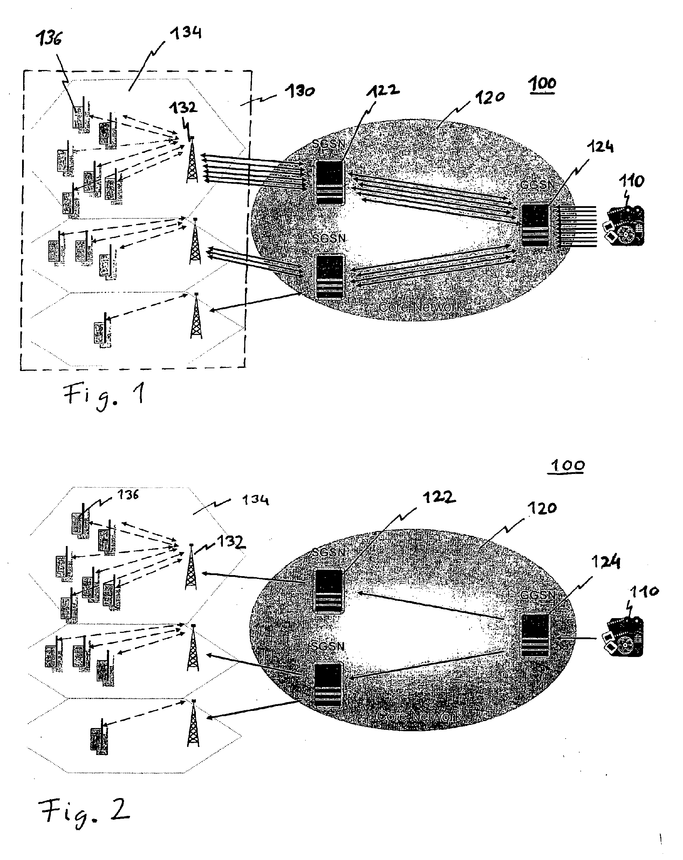

Fig. 1 schematically illustrates an UMTS network 100 as an embodiment of a (third generation) PTP-enabled network. A content provider 110 provides content data to a Broadcast-Multicast Service center (not shown) attached to or included in a core network 120 of the UMTS network 100. The core network 120 is divided in circuit switched (not shown) and packet switched domains. Packet switched elements of the core network 120 comprise a Serving GPRS Support Node (SGSN) 122 and a Gateway GPRS Support Node (GGSN) 124.

The UMTS network 100 further comprises a radio access network 130. The radio access network 130 comprises a Radio Network Controller (RNC, not shown) and several base transceiver stations (or NodeBs) 132 connected to the RNC. Each NodeB 132 covers one or more cell areas 134 in which one or more mobile clients 136 are attached to the NodeB 132.

Fig. 1 illustrates by arrows the PTP transmission of content data (corresponding to a certain content service) from the content provider 110 through the core network 120 to individual mobile clients 136 of the radio access network 130 via multiple PTP-type transport bearers. As shown in Fig. 1, there is one PTP connection between the content provider 110 and each mobile client 136.

As opposed to the many individual PTP transmissions of identical content data shown in Fig. 1, a PTM transmission based on the MBMS standard in a PTM-enabled UMTS network 100 is shown by arrows for the analogous setup in Fig. 2. Like reference numbers refer to like components. The content provider 110 provides a single stream of content data entering the core network 120 at a GGSN 124, where it is split up to one or more SGSN 122 and further distributed to several NodeBs 132. The content data is provided by each NodeB 132 to a plurality of mobile clients 136 in a PTM transmission via a single PRM-type transport bearer.

The following discussion of exemplary embodiments uses the example of a hybrid network supporting both PTP and PTM delivery technologies as illustrated in Figs. 1 and 2. The MBMS standard and the DVB-H standard are examples of PTM delivery technologies used in addition to PTP bearers, which are preferably interactive bearers.

Each content service distributed via the hybrid network 100 has a service identifier and distributed within one or more PTM areas. Each PTM area has a PTM area identifier. In the case of the MBMS standard, the PTM area is referred to as a MBMS service area (MSA), and the PTM area identifier is referred to as a MBMS service area identifier (MSAI).

Each PTM area comprises one or more access areas. Each access area is identified by an access area identifier. In the case of a cellular network, such as the UMTS-based hybrid network illustrated in Figs. 1 and 2, each cell area 134 is an example of an access area, but each cell area may also be divided in multiple separate access areas. In the following, the term "access area" is used as a collective term for a cell area, a location area, a routing area, or a tracking area. The concept of the disclosure applies analogously to all these and other spatial segmentations of the hybrid network 100. In the present embodiments, the access area segmentation defines the geographical granularity in which bearer availability (and unavailability) information is defined and provided to the mobile clients 136.

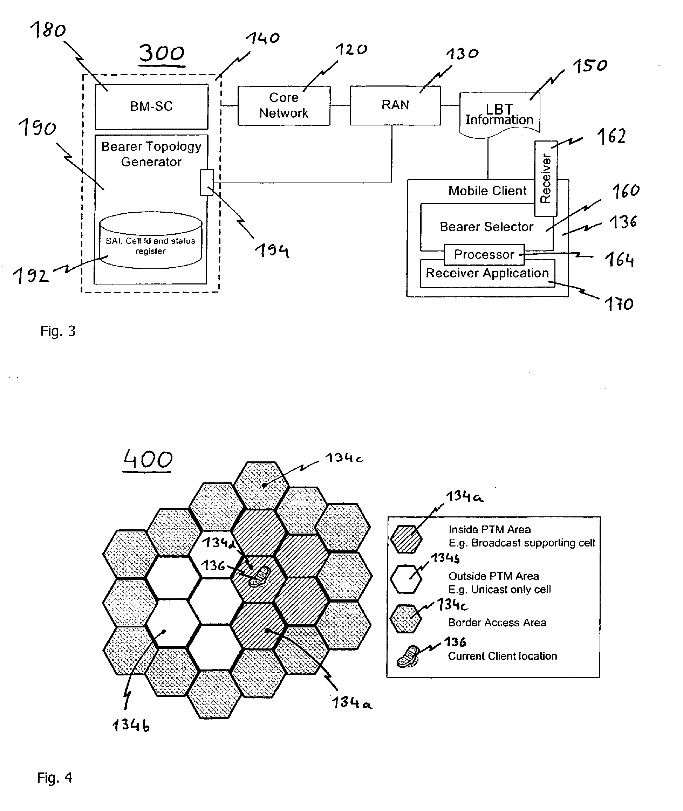

Fig. 3 shows a system 300 comprising an embodiment of a mobile client 136 and an embodiment of a network node 140 that may be components of the UMTS network 100 of Figs. 1 and 2. The node 140 is connected to the mobile client 136 via a core network 120 and a radio access network 130. Via this connection, Local Bearer Topology (LBT) information 150 is transmitted to the mobile client 136.

The mobile client 136 comprises a bearer selector 160 connected to a receiver 162 and a processor 164. The mobile client 136 further comprises a receiver application 170 that is executed by the processor 164 and consumes content data. The receiver application 170 may, for example, be a mobile TV application. In the mobile client 136, the bearer selector 160 is functionally arranged between the receiver 162 and the receiver application 170. Accordingly, the bearer selector 160 acts as a middle-ware agent during the reception of content services.

On the stationary network side, the network node 140 comprises a Broadcast/Multicast Service Center (BM-SC) 180 and a bearer topology generator (BTG) 190. The BM-SC 180 may serve as an entry point for content providers such as the content provider 110 shown in Figs. 1 and 2 (i.e., for third party content providers). Furthermore, the BM-SC 180 is adapted to provide service announcements regarding a content service.

The receiver 162 of the mobile client 136 is adapted to receive the service announcements from the node 140. The mobile client 136 is furthermore adapted to send a PTP registration for a PTP reception. The BM-SC 180 is adapted to receive and analyze the PTP registration from the mobile client 136.

The BTG 190 of the node 140 is adapted to generate the LBT information 150. In the present embodiment, the BTG 190 comprises a database 192 providing a mapping from PTM areas to one or more access areas of each PTM area. In the MBMS context, this mapping includes a mapping from the MBMS Service Area Identifiers (MSAI) to cell area identifiers. Furthermore, the database 192 stores information regarding operation and maintenance of components in the radio access network 130 in a status register. Alternatively, the mapping and the status register can be stored in different databases. Further alternatively or in addition, status information regarding operation and maintenance of components in the radio access network 130 can be directly requested by the BTG 190 via an operation and maintenance interface 194 from the radio access network 130.

The node 140 shown in Fig. 3 has the BTG 190 co-located with the BM-SC 180 outside the core network 120 to facilitate information exchange between these components. In an alternative embodiment, the BTG 190 is located in the core network 120, in particular in the SGSN 122 or in a Mobility Management Entity (MME, not shown). In a still further embodiment, the BTG 190 is entirely implemented in the radio access network 130.

With reference to Fig. 4, an exemplary LBT 400 as defined or generated by the BTG 190 is shown in more detail. In generating the LBT 400, the BTG 190 may take into account the network status information retrievable from the database 192 or via the interface 194, and the PTM area defined for a specific content service and stored in the database 192. Information regarding the LBT 400, such as the LBT information 150 shown in Fig. 3, comprises one or more lists of access area identifiers. Generally speaking, these lists indicate access areas in a direct neighborhood around a current location or access area of a mobile client 136 and furthermore indicate for each listed access area at least one bearer type (and/or bearer identifier) provided by the hybrid network 100 in the specific area.

In a first embodiment, the LBT information 150 representative of the LBT 400 comprises a first list including access areas of the LBT 400 that provide a PTM-type bearer inside respective PTM areas 134a. A second list includes access area identifiers of access areas outside the PTM access areas 134b, that provide only PTP-type bearers. A third list of access areas of the LBT 400 indicates border access areas 134c. The border access areas 134c of the LBT 400 describe a closed "ring" around a central set of access areas covered by the LBT 400. The border access areas 134c may be included in or may be excluded from any one or both of the first list and second list. In the case of including the border access areas, an alternative embodiment of the LBT information 150 comprises an additional attribute (in the first and/or second list) indicating the border access areas.

The embodiment of the LBT 400 shown in Fig. 4 uses an inside/outside PTM characteristic as a hybrid criteria of the hybrid network 100. In another embodiment of the LBT 400, the LBT information 150 includes an alternative second list of access areas in the LBT 400 indicating whether the corresponding access area provides a PTM-type bearer (independent of the parallel provision of a PTM-type bearer). The latter embodiment of the LBT 400 is an example for a PTM/PTP characteristic describing the hybrid criteria of the hybrid network 100. In a still further embodiment of the LBT 400, a fourth list of access areas in the LBT 400 includes access areas providing a DVB-H PTM-type bearer (instead of or in addition to the aforementioned MBMS PTM-type bearer). In still another embodiment of the LBT 400, additional lists are provided indicating an unavailability of the entire hybrid network 100 or of a specific type of bearer in the access areas belonging to the LBT 400.

The LBT information 150 (and LBT 400) is either generated individually for the mobile client 136 (or for each request of the mobile client 136) or the LBT information 150 and LBT 400 can be default parameters. In the case of an individualized LBT 400, the shape of the LBT 400 optionally depends on a mobility of the mobile client 136. The client mobility can be derived from a movement history or movement prediction (direction and speed of the mobile client). Depending on the location of the mobile client, the LBT 400 can be individually shaped as a circle for residential areas or more elliptically in case of road or tracks. The mobile client 136 is able to identify and/or monitor a current access area 134d of the mobile client 136, which is identified by an area identifier (particularly by a cell identifier). Adapting the shape of the LBT 400 depending on the client mobility reduces the number of update requests for LBT information 150 of the mobile client moving along a motorway.

As regards the mobile client 136, the main task of the bearer selector 160 is to evaluate the LBT information 150 in order to retrieve information for the current access area 134d. The bearer selector 160 selects a preferred or an appropriate bearer or bearer type for the reception of a content service depending on the received LBT information 150 and sends requests for new LBT information 150 if the current access area 134d is or becomes a border access area 134c. The request for LBT information 150 may include the current access area identifier, particularly the current cell identifier or other location information. Optionally, the request for LBT information 150 further includes the movement history or the movement prediction.

As regards the receiver application 170 in the mobile client 136, the functionality of a conventional Electronic Program Guide (EPG) or Electronic Service Guide (ESG) can be enhanced as follows. In existing solutions for mobile TV services, the mobile client 136 receives the EPG, which informs the mobile client 136 that a particular content service is or will be provided via a specific PTM bearer for a PTM transmission. The conventional EPG works fine for streaming content services, such as "nationwide" mobile TV services, which are continuously provided at the times announced by the EPG. However, the conventional technique fails for regionally adapted content services, since the information provided by the EPG is independent of the current location of the mobile client 136.

The enhanced ESG is adapted to the current access area 134d of the mobile client 136 and indicates for a certain content service the bearer or bearer type providing this content service. As a result, a list of available content services can be generated and displayed by the receiver application 170 to a user of the mobile client 136. For example, in a rural access area where PTM-type coverage is not efficient, mobile TV services are indicated as available on a PTP-type bearer. Content services which are regionally adapted are included in this list according to the current location of the mobile client 136. Accordingly, content services which are not offered in the current access area of the mobile client 136 may be removed from the enhanced ESG.

Another advantage arising from the LBT 400 as well as the enhanced ESG is the reduction of power consumption and start-up time. A conventional mobile client 136 cannot detect if the access area 134, to which the mobile client 136 is currently connected provides a PTM bearer. Thus, the conventional mobile client 136 loops a continuous bearer monitoring which consumes battery power in vane while resting in an access area that provides no PTM bearers. This problem arises in particular for conventional hybrid mobile TV clients, which are required to check on the PTM-type bearer whether the content service is provided in order to detect an opportunity of switching to the preferred PTM transmission. For example, a conventional mobile TV client 136 residing in a rural access area where PTM-type bearers are permanently unavailable (for example, a client with a "home zone" in the rural access area) unnecessarily wastes battery and start-up time checking the broadcast bearer. This problem is solved by the LBT 400 and/or the enhanced ESG, which provides the correct bearer type. The enhanced ESG beneficially combines with the LBT 400 since the mobile client 136 may request an ESG update triggered by the bearer selector 160 when the received LBT information 150 indicates a change in the bearer type.

As regards the node 140 in the hybrid network 100, the BTG 190 maintains the database 192, or has (in a limited embodiment of the BTG 190) at least access to the database 192. The database 192 furthermore includes geographical data of the access areas 134 for adapting the shape of the LBT 400 and indicating border access areas.

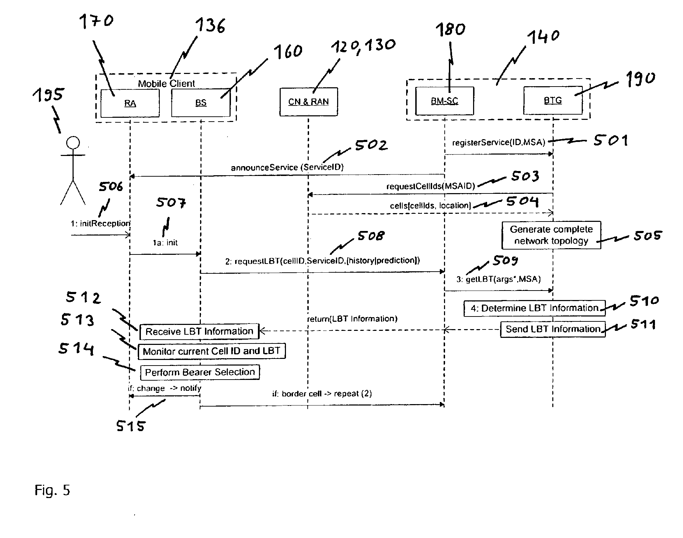

An overview of method steps in a signaling interaction between a mobile client 136 and a node 140 of the hybrid network 100 is shown in Fig. 5. As already shown for the system embodiment 300 in Fig. 3, the node 140 comprises a BM-SC 180 and a BTG 190. The node 140 is connected by Core Network (CN) 120 and Radio Access Network (RAN) 130 with the mobile client 136 comprising a bearer selector 160 and a receiver application 170.

The BM-SC 180 registers a new service with the BTG 190 providing a service identifier (ID) and a MBMS Service Area (MSA) in step signaling 501. The latter information is stored by the BTG 190 in the database 192. In signaling step 502, the BM-SC 180 publicly announces the content service providing, amongst other information, the service identifier. The service recently registered with the BTG 190 causes the BTG 190 to request cell identifiers corresponding to the MSA Identifier (MSA-ID) of the recently registered content service as shown in signaling step 503. In response, the radio access network 130 provides to the BTG 190 in signaling step 504 the requested cell information corresponding to the MSA, including its status information. The provided cell identifiers and provided cell locations are stored by the BTG 190 in the database 192. Based on such information, the BTG 190 (gradually) generates a complete network topology (that forms the basis for generating LBTs) in step 505.

The reception of a content service is initiated by a user 195 of the mobile client 136 as shown in step 506. The user 195 interacting with the receiver application 170 (and, optionally, an ESG or EPG) determines the content service to be requested. The corresponding service identifier is handed over from the receiver application 170 to the bearer selector 160 in step 507. The bearer selector 160 determines the current access area 134d of the mobile client 136 (particularly the cell identifier) and optionally the movement history or movement prediction of the mobile client 136. The bearer selector 160 sends a request for LBT information including the current cell identifier and the service identifier and the optional mobility information as shown in signaling step 508 to the node 140.

The request is received by the BM-SC 180 (managing at least a subset of the multimedia services provided by the hybrid network 100), which resolves the service identifier using a MSA identifier list and forwards the information in signaling step 509 to the BTG 190. In step 510, the BTG 190 determines the requested LBT information. In case of a default LBT information (i.e., of default LBTs), the LBT information 150 is retrieved from a database (not shown) depending on the access area 134d (in particular depending on the cell identifier received with the LBT request in step 508). In case of individually generated LBT information (i.e., of client-individual LBTs), the BTG 190 generates the LBT information depending on the client location and/or mobility information.

In case the LBT request includes mobility information (e.g., a mobility prediction), the BTG 190 adapts the shape of the LBT 400 to be elongated along a predicted trace. In case the mobility information includes the movement history, the BTG 190 calculates an expected future location of the mobile client 136 based on the movement history. For example, if the mobile client 136 rarely moves according to the movement history, the shape of the LBT 400 is set to a small circle area around the location of the mobile client 136. In case of the absence of the optional movement information, the shape of the LBT is set to a default shape. Optionally, the BTG 190 compares the received cell identifier with location context information to adapt the shape of the LBT 400 according to the location context information. The location context information may be indicative of specific geographical or infrastructure features of the current location of the mobile client 136. For example, if the corresponding cell covers a motorway, the shape of the LBT is elongated in the direction of the motorway.

The BTG 190 requests those access areas (particularly, those cell areas) of the MSA corresponding to the service identifier from the database 192 within the LBT 400 as determined before. Based on those access areas, the BTG 190 generates a first list for the LBT information 150 indicating the availability of the content service via the PTM-type bearer. Then, the BTG 190 requests all other access areas (particularly cell areas) from the database 192 within the LBT. For these access areas, the BTG 190 generates a second list indicating the availability of the content service via the PTP-type bearer. Finally, based on the geographical information in the database 322 for the access areas in the LBT, the BTG 190 identifies border access areas of the LBT. Based on the these border access areas, the BTG 190 generates a third list.

In step 511, the BTG hands the LBT information 150 comprising the three lists to the BM-SC 180, from where it is sent via the CN 120 and RAN 130 to the mobile client 136. In the mobile client 136, the LBT information 150 is passed to the bearer selector 160 in step 512. The bearer selector 160 continuously monitors the identifier of the current access area of the mobile client 136 as shown in step 513. Monitoring the current access area identifier by the bearer selector 160 can be combined with the conventional Mobility Management (MM) procedures. From the received LBT information 150 (i.e., from the one or more lists), the bearer selector 160 determines which bearer type is currently available. In case of a change in the availability of the current bearer or if a movement prediction indicates a future change of the currently available bearer, the bearer selector 160 performs bearer selection in step 514 by signaling the change to the receiver application 170 in step 515. In case the bearer selector 160 finds the current cell indicated as a border cell of the LBT, the bearer selector 160 requests new LBT information repeating signaling step 508.

As has become apparent from the above embodiments, the technique presented herein provides various advantages. First of all, the technique can be integrated with already existing and wide spread technologies as shown with reference to Figs. 1 to 3. In any case, the mobile client 136 gets informed regarding the local bearer topology 400. This is in particular beneficial to receive all transmission sessions of a hybrid Push Broadcast Service. Based on the bearer selection, the mobile client receives seamlessly and undelayed content data of the content service. The mobile client may furthermore be informed regarding regionally available bearer types which combines beneficially with the enhanced ESG indicating regional content services.

The amount of signaling data is minimized as the mobile client 136 can move autonomously in the area covered by the LBT. There is, furthermore, no need for evaluating reception reports for the typically very large group of mobile clients 136 receiving a mass content service. The amount of signaling data is reduced in total, and the frequency of updates for LBT information are adapted to the client mobility.

Eventually, the energy consumption of the mobile client is reduced, since reception of PTM bearers can be disabled if the unavailability of the PTM-type bearer is indicated for the current access area in the LBT information.

In the foregoing, the principles, preferred embodiments and various modes of implementing the techniques disclosed herein have exemplarily been described. However, the present invention should not be construed as being limited to the particular principles, embodiments and modes discussed above. Rather, it will be appreciated that variations and modifications may be made by a person skilled in the art without departing from the scope of the present invention as defined in the following claims.

## Claims

1. A method of controlling bearer selection by a mobile client (136) in a network (100) having a plurality of access areas (134), each access area (134) providing for a transmission of content data at least one of a point-to-multipoint, or PTM, -type bearer and a point-to-point, or PTP, -type bearer, the method comprising:
- receiving information regarding a local bearer topology (400), or LBT, the LBT (400) comprising at least two neighbouring access areas (134) including an access area (134) of the mobile client (136), the LBT information (150) indicating for each access area (134) of the LBT (400) an availability or unavailability of at least one bearer of at least one bearer type, and the LBT information (150) further indicating for at least one access area (134) of the LBT (400) if it is a border access area (134c) of the LBT (400); and
- performing bearer selection based on the LBT information (150).

2. The method of claim 1, wherein at least one of the receipt of the LBT information (150) and the bearer selection is repeated after or triggered by a change of the access area (134) of the mobile client (136).

3. The method of claim 1 or 2, further comprising
- sending an LBT request for the LBT information (150) to a node (140) of the network (100).

4. The method of claim 3, wherein the LBT request includes a service identifier regarding a content service provided by the network (100), and wherein the at least one bearer indicated as available in the LBT information (150) provides the content service.

5. The method of any of the preceding claims, wherein the network (100) provides a plurality of content services, each content service providing content data, the method further comprising
- sending a service request for service information to a node (140) of the network (100), the service information indicating out of the plurality of content services at least one content service provided at present or in future in the access area (134) of the mobile client (136) and further indicating for the at least one content service which bearer to select; and
- receiving the requested service information from the node (140) of the network (100).

6. A method of controlling bearer selection by a mobile client (136) in a network (100) having a plurality of access areas (134), each access area (134) providing for a transmission of content data at least one of a point-to-multipoint, or PTM, -type bearer and a point-to-point, or PTP, -type bearer, the method comprising:
- determining information regarding a local bearer topology (400), or LBT, the LBT (400) comprising at least two neighbouring access areas (134) including an access area (134) of the mobile client (136), the LBT information (150) indicating for each access area (134) of the LBT (400) an availability or unavailability of at least one bearer of at least one bearer type, and the LBT information (150) further indicating for at least one access area (134) of the LBT (400) if it is a border access area (134c) of the LBT (400); and
- sending the LBT information (150) to the mobile client (136).

7. The method of claim 6, further comprising
- receiving an LBT request for the LBT information (150) from the mobile client (136).

8. The method of claim 6 or 7, wherein sending the LBT information (150) is triggered when the mobile client (136) is located in or enters a border access area (134c) of a current or previous LBT (400).

9. The method of any of the claims 6 to 8, wherein the network (100) provides a plurality of content services, each content service providing content data, the method further comprising
- receiving a service request for service information from the mobile client (136), the service information indicating out of the plurality of content services at least one content service provided at present or in future in the access area (134) of the mobile client (136) and further indicating for the at least one content service which bearer to select; and
- sending the service information to the mobile client (136).

10. The method of any of the claims 6 to 9, wherein determining the LBT information (150) comprises generating the LBT information (150) based on at least one of a PTM area definition and an access area status.

11. The method of any of the claims 6 to 10, wherein determining the LBT information (150) comprises retrieving the LBT information (150) from a database in the network (100) depending on client mobility information.

12. The method of any of the preceding claims, wherein the shape of LBT (400) takes into account client mobility information regarding at least one of the access area (134) of the mobile client (136), a location, a location history, a movement direction, and a movement speed.

13. A computer program product comprising program code portions for performing the steps of any of the claims 1 to 15 when executed by one or more computing devices, wherein the computer program product is stored on a computer readable recoding medium.

14. A bearer selector (160) for a mobile client (136) connected to a network (100) having a plurality of access areas (134), each access area (134) providing for a transmission of content data at least one of a point-to-multipoint, or PTM, -type bearer and a point-to-point, or PTP, -type bearer, the bearer selector (160) comprising:
- a receiver adapted to receive information regarding a local bearer topology (400), or LBT, the LBT (400) comprising at least two neighbouring access areas (134) including an access area (134) of the mobile client (136), the LBT information (150) indicating for each access area (134) of the LBT (400) an availability or unavailability of at least one bearer of at least one bearer type, and the LBT information (150) further indicating for at least one access area (134) of the LBT (400) if it is a border access area (134c) of the LBT (400); and
- a processor adapted to perform bearer selection based on the LBT information (150).

15. A bearer topology generator (190) for a node (140) of a network (100) having a plurality of access areas (134), each access area (134) providing for a transmission of content data at least one of a point-to-multipoint, or PTM, -type bearer and a point-to-point, or PTP, -type bearer, the bearer topology generator (190) comprising:
- a processor adapted to determine information regarding a local bearer topology (400), or LBT, the LBT (400) comprising at least two neighbouring access areas (134) including an access area (134) of the mobile client (136), the LBT information (150) indicating for each access area (134) of the LBT (400) an availability or unavailability of at least one bearer of at least one bearer type, and the LBT information (150) further indicating for at least one access area (134) of the LBT (400) if it is a border access area (134c) of the LBT (400); and
- a sender adapted to send the LBT information (150) to the mobile client (136).

## Patentansprüche

1. Verfahren zur Steuerung einer Trägerauswahl durch einen mobilen Client (136) in einem Netzwerk (100) mit einer Mehrzahl von Zugangsbereichen (134), wobei jeder Zugangsbereich (134) für eine Übertragung von Inhaltsdaten einen Punkt-zu-Mehrpunkt- bzw. PTM-Typ Träger und/oder einen Punkt-zu-Punkt- bzw. PTP-Typ Träger bereitstellt, wobei das Verfahren umfasst:
- Empfangen von Information bezüglich einer lokalen Trägertopologie (400) bzw. LBT, wobei die LBT (400) mindestens zwei benachbarte Zugangsbereiche (134) umfasst, die einen Zugangsbereich (134) des mobilen Clients (136) umfassen, die LBT-Information (150) für jeden Zugangsbereich (134) der LBT (400) eine Verfügbarkeit oder Nichtverfügbarkeit mindestens eines Trägers von mindestens einem Trägertyp anzeigt, und die LBT-Information (150) ferner für mindestens einen Zugangsbereich (134) der LBT (400) anzeigt, ob er ein Randzugangsbereich (134c) der LTB (400) ist; und
- Durchführen einer Trägerauswahl basierend auf der LTB-Information (150).

2. Verfahren nach Anspruch 1, wobei der Empfang der LBT-Information (150) und/oder der Trägerauswahl nach einem oder ausgelöst durch einen Wechsel des Zugangsbereichs (134) des mobilen Clients (136) wiederholt wird.

3. Verfahren nach Anspruch 1 oder 2, ferner umfassend:
- Senden einer LBT-Anforderung für die LBT-Information (150) an einen Knoten (140) des Netzwerks (100).

4. Verfahren nach Anspruch 3, wobei die LBT-Anforderung eine Dienstkennung bezüglich eines Inhaltsdienstes vom Netzwerk (100) bereitgestellt umfasst, und wobei der mindestens eine Träger, der in den LBT-Information (150) als verfügbar angezeigt wird, den Inhaltsdienst bereitstellt.

5. Verfahren nach einem der vorhergehenden Ansprüche, wobei das Netzwerk (100) eine Mehrzahl von Inhaltsdiensten bereitstellt, wobei jeder Inhaltsdienst Inhaltsdaten bereitstellt, und das Verfahren ferner umfasst:
- Senden einer Dienstanforderungen für Dienstinformation an einen Knoten (140) des Netzwerks (100), wobei die Dienstinformation aus der Mehrzahl von Inhaltsdiensten mindestens einen Inhaltsdienst anzeigt, der gegenwärtig oder künftig im Zugangsbereich (134) des mobilen Clients(136) bereitgestellt wird, und ferner für den mindestens einen Inhaltsdienst anzeigt, welcher Träger ausgewählt werden soll; und
- Empfangen der angeforderten Dienstinformation vom Knoten (140) des Netzwerks (100).

6. Verfahren zur Steuerung einer Trägerauswahl durch einen mobilen Client (136) in einem Netzwerk (100) mit einer Mehrzahl von Zugangsbereichen (134), wobei jeder Zugangsbereich (134) für eine Übertragung von Inhaltsdaten einen Punkt-zu-Mehrpunkt- bzw. PTM-Typ Träger und/oder einen Punkt-zu-Punkt- bzw. PTP-Typ Träger bereitstellt, wobei das Verfahren umfasst:
- Bestimmen von Information bezüglich einer lokalen Trägertopologie (400) bzw. LBT, wobei die LBT (400) mindestens zwei benachbarte Zugangsbereiche (134) umfasst, die einen Zugangsbereich (134) des mobilen Clients (136) umfassen, die LBT-Information (150) für jeden Zugangsbereich (134) der LBT (400) eine Verfügbarkeit oder Nichtverfügbarkeit mindestens eines Trägers von mindestens einem Trägertyp anzeigt, und die LBT-Information (150) ferner für mindestens einen Zugangsbereich (134) der LBT (400) anzeigt, ob er ein Randzugangsbereich (134c) der LBT (400) ist; und
- Senden der LBT-Information (150) an den mobilen Client (136).

7. Verfahren nach Anspruch 6, ferner umfassend:
- Empfangen einer LBT-Anforderung für die LBT-Information (150) vom mobilen Client (136).

8. Verfahren nach Anspruch 6 oder 7, wobei das Senden der LBT-Information (150) ausgelöst wird, wenn der mobile Client (136) sich in einem Randzugangsbereich (134c) einer aktuellen oder früheren LBT (400) befindet oder darin eintritt.

9. Verfahren nach einem der Ansprüche 6 bis 8, wobei das Netzwerk (100) eine Mehrzahl von Inhaltsdiensten bereitstellt, wobei jeder Inhaltsdienst Inhaltsdaten bereitstellt, und das Verfahren ferner umfasst::
- Empfangen einer Dienstanforderung für Dienstinformation vom mobilen Client (136), wobei die Dienstinformation aus der Mehrzahl von Inhaltsdiensten mindestens einen Inhaltsdienst anzeigt, der gegenwärtig oder künftig im Zugangsbereich (134) des mobilen Clients (136) bereitgestellt wird, und ferner für den mindestens einen Inhaltsdienst anzeigt, welcher Träger ausgewählt werden soll; und
- Senden der LBT-Information an den mobilen Client (136).

10. Verfahren nach einem der Ansprüche 6 bis 9, wobei das Bestimmen der LBT-Information (150) ein Erzeugen der LBT-Information (150) basierend auf einer PTM-Bereichsdefinition und/oder einem Zugangsbereichsstatus umfasst.

11. Verfahren nach einem der Ansprüche 6 bis 10, wobei das Bestimmen der LBT-Information (150) ein Abrufen der LBT-Information (150) aus einer Datenbank des Netzwerks (100) in Abhängigkeit von Client-Mobilitätsinformation umfasst.

12. Verfahren nach einem der vorhergehenden Ansprüche, wobei die Form der LBT (400) Client-Mobilitätsinformation bezüglich mindestens eines von dem Zugangsbereich (134) des mobilen Clients (136), einem Aufenthaltsort, einer Aufenthaltsortsvorgeschichte, einer Bewegungsrichtung und einer Bewegungsgeschwindigkeit berücksichtigt.

13. Computerprogrammprodukt, umfassend Programmcodeabschnitte zum Ausführen der Schritte nach einem der Ansprüche 1 bis 15, wenn durch ein oder mehr Rechengeräte ausgeführt, wobei das Computerprogrammprodukt auf einem computerlesbaren Aufzeichnungsmedium gespeichert ist.

14. Trägerwähler (160) für einen mobilen Client (136), der mit einem Netzwerk (100) mit einer Mehrzahl von Zugangsbereichen (134) verbunden ist, wobei jeder Zugangsbereich (134) für eine Übertragung von Inhaltsdaten einen Punkt-zu-Mehrpunkt- bzw. PTM-Typ Träger und/oder einen Punkt-zu-Punkt- bzw. PTP-Typ Träger bereitstellt, wobei der Trägerwähler (160) umfasst:
- einen Empfänger, der so ausgelegt ist, dass er Information bezüglich einer lokalen Trägertopologie (400) bzw. LBT empfängt, wobei die LBT (400) mindestens zwei benachbarte Zugangsbereiche (134) umfasst, die einen Zugangsbereich (134) des mobilen Clients (136) umfassen, die LBT-Information (150) für jeden Zugangsbereich (134) der LBT (400) eine Verfügbarkeit oder Nichtverfügbarkeit mindestens eines Trägers von mindestens einem Trägertyp anzeigt, und die LBT-Information (150) ferner für mindestens einen Zugangsbereich (134) der LBT (400) anzeigt, ob er ein Randzugangsbereich (134c) der LBT (400) ist; und
- einen Prozessor, der so ausgelegt ist, dass er eine Trägerauswahl basierend auf den LTB-Information (150) durchführt.

15. Träger-Topologiegenerator (190) für einen Knoten (140) eines Netzwerks (100) mit einer Mehrzahl von Zugangsbereichen, wobei jeder Zugangsbereich (134) für eine Übertragung von Inhaltsdaten einen Punkt-zu-Mehrpunkt- bzw. PTM-Typ Träger und/oder einen Punkt-zu-Punkt- bzw. PTP-Typ Träger bereitstellt, wobei der Träger-Topologiegenerator (190) umfasst:
- einen Prozessor, der so ausgelegt ist, dass er Information bezüglich einer lokalen Trägertopologie (400) bzw. LBT bestimmt, wobei die LBT (400) mindestens zwei benachbarte Zugangsbereiche (134) umfasst, die einen Zugangsbereich (134) des mobilen Clients (136) umfassen, die LBT-Information (150) für jeden Zugangsbereich (134) der LBT (400) eine Verfügbarkeit oder Nichtverfügbarkeit mindestens eines Trägers von mindestens einem Trägertyp anzeigt, und die LBT-Information (150) ferner für mindestens einen Zugangsbereich (134) der LBT (400) anzeigt, ob er ein Randzugangsbereich (134c) der LBT (400) ist; und
- einen Sender, der so ausgelegt ist, dass er die LBT-Information (150) an den mobilen Client (136) sendet.

## Revendications

1. Procédé de commande de sélection de support par un client mobile(136) dans un réseau (100) ayant une pluralité de zones d'accès (134), chaque zone d'accès (134) assurant une transmission de données de contenu pour au moins un d'un support de type PTM, point à multipoint, et un support de type PTP, point à point, le procédé comprenant de :
- recevoir une information relative à une topologie de support locale (400), ou LBT, la LBT (400) comprenant au moins deux zones d'accès voisines (134) incluant une zone d'accès (134) du client mobile (136), l'information LBT (150) indiquant pour chaque zone d'accès (134) de la LBT (400) une disponibilité ou indisponibilité d'au moins un support d'au moins un type de support, et l'information LBT (150) indiquant en outre pour au moins une zone d'accès (134) de la LBT (400) si il s'agit d'une zone d'accès périphérique (134c) de la LBT (400) ; et
- effectuer une sélection de support sur la base de l'information LBT (150).

2. Procédé selon la revendication 1, dans lequel au moins une de la réception de l'information LBT (150) et la sélection de support est répétée après ou déclenchée par un changement de zone d'accès (134) du client mobile (136).

3. Procédé selon les revendications 1 ou 2, comprenant en outre de :
- envoyer une demande LBT pour l'information LBT (150) à un noeud (140) du réseau (100).

4. Procédé selon la revendication 3, dans lequel la demande LBT inclut un identifiant de service relatif à un service de contenu fourni par le réseau (100), et dans lequel au moins un support indiqué comme disponible dans l'information LBT (150) fournit le contenu de service.

5. Procédé selon une quelconque des revendications précédentes, dans lequel le réseau (100) fournit une pluralité de services de contenu, chaque service de contenu fournissant des données de contenu, le procédé comprenant en outre de :
- envoyer une demande de service pour une information de service à un noeud (140) du réseau (100), l'information de service indiquant parmi la pluralité de services de contenu au moins un service de contenu fourni actuellement ou à l'avenir dans la zone d'accès (134) du client mobile (136) et indiquant en outre pour au moins un service de contenu quel support sélectionner ; et
- recevoir l'information de service demandée depuis le noeud (140) du réseau (100).

6. Procédé de commande de sélection de support par un client mobile (136) dans un réseau (100) ayant une pluralité de zones d'accès (134), chaque zone d'accès (134) assurant une transmission de données de contenu pour au moins un d'un support de type PTM, point à multipoint, et un support de type PTP, point à point, le procédé comprenant de :
- déterminer une information relative à une topologie de support local (400), ou LBT, la LBT (400) comprenant au moins deux zones d'accès voisines (134) incluant une zone d'accès (134) du client mobile (136), l'information LBT (150) indiquant pour chaque zone d'accès (134) de la LBT (400) une disponibilité ou indisponibilité d'au moins un support d'au moins un type de support, et l'information LBT (150) indiquant en outre pour au moins une zone d'accès (134) de la LBT (400) si il s'agit d'une zone d'accès périphérique (134c) de la LBT (400) ; et
- envoyer l'information LBT (150) au client mobile (136).

7. Procédé selon la revendication 6, comprenant en outre de :
- recevoir une demande LBT pour l'information LBT (150) depuis le client mobile (136).

8. Procédé selon les revendications 6 ou 7, dans lequel l'envoi de l'information LBT (150) est déclenché quand le client mobile (136) est situé dans ou entre dans une zone d'accès périphérique (134c) d'une LBT actuelle ou précédente (400).

9. Procédé selon une quelconque des revendications 6 à 8, dans lequel le réseau (100) fournit une pluralité de services de contenu, chaque service de contenu fournissant des données de contenu, le procédé comprenant en outre de :
- recevoir une demande de service pour une information de service depuis le client mobile (136), l'information de service indiquant parmi la pluralité de services de contenu au moins un service de contenu fourni actuellement ou à l'avenir dans la zone d'accès (134) du client mobile (136) et indiquant en outre pour au moins un service de contenu quel support sélectionner ; et
- envoyer l'information de service au client mobile (136).

10. Procédé selon une quelconque des revendications 6 à 9, dans lequel déterminer l'information LBT (150) comprend de générer l'information LBT (150) sur la base d'au moins une d'une définition de zone PTM et un statut de zone d'accès.

11. Procédé selon une quelconque des revendications 6 à 10, dans lequel déterminer l'information LBT (150) comprend d'extraire l'information LBT (150) d'une base de données dans le réseau (100) en fonction de l'information de mobilité de client.

12. Procédé selon une quelconque des revendications précédentes, dans lequel la forme de la LBT (400) prend en compte l'information de mobilité de client relative à au moins un de la zone d'accès (134) du client mobile (136), une localisation, un historique de localisation, une direction de mouvement et une vitesse de mouvement.

13. Produit de programme informatique comprenant des portions de code de programme pour effectuer les étapes d'une quelconque des revendications 1 à 15 quand exécuté par un ou plusieurs dispositifs informatiques, dans lequel le produit de programme informatique est mémorisé sur un support d'enregistrement lisible par ordinateur.

14. Sélecteur de support (160) pour un client mobile (136) connecté à un réseau (100) ayant une pluralité de zones d'accès (134), chaque zone d'accès (134) assurant une transmission de données de contenu pour au moins un d'un support de type PTM, point à multipoint, et un support de type PTP, point à point, le sélecteur de support (160) comprenant :
- un récepteur adapté pour recevoir une information relative à une topologie de support locale (400), ou LBT, la LBT (400) comprenant au moins deux zones d'accès voisines (134) incluant une zone d'accès (134) du client mobile (136), l'information LBT (150) indiquant pour chaque zone d'accès (134) de la LBT (400) une disponibilité ou indisponibilité d'au moins un support d'au moins un type de support, et l'information LBT (150) indiquant en outre pour au moins une zone d'accès (134) de la LBT (400) si il s'agit d'une zone d'accès périphérique (134c) de la LBT (400) ; et
- un processeur adapté afin d'effectuer une sélection de support sur la base de l'information LBT (150).

15. Générateur de topologie de support (190) pour un noeud (140) d'un réseau (100) ayant une pluralité de zones d'accès (134), chaque zone d'accès (134) assurant une transmission de données de contenu pour au moins un d'un support de type PTM, point à multipoint, et un support de type PTP, point à point, le générateur de topologie de support (190) comprenant :
- un processeur adapté afin de déterminer une information relative à une topologie de support locale (400), ou LBT, la LBT (400) comprenant au moins deux zones d'accès voisines (134) incluant une zone d'accès (134) du client mobile (136), l'information LBT (150) indiquant pour chaque zone d'accès (134) de la LBT (400) une disponibilité ou indisponibilité d'au moins un support d'au moins un type de support, et l'information LBT (150) indiquant en outre pour au moins une zone d'accès (134) de la LBT (400) si il s'agit d'une zone d'accès périphérique (134c) de la LBT (400) ; et
- un émetteur adapté pour envoyer l'information LBT (150) au client mobile (136).
